# EUROPEAN PATENT SPECIFICATION

(11) **EP 1 109 608 B1**
(45) Date of publication and mention of the grant of the patent: **23.04.2003**
(21) Application number: 99944707.1
(22) Date of filing: 08.09.1999
(51) Int. Cl.: B01D 5/00

(54) **VAPOUR RECOVERY SYSTEM**
SYSTEM ZUR RÜCKGEWINNUNG VON DAMPF
CIRCUIT DE RECUPERATION DE LA PHASE GAZEUSE

(30) Priority: 11.09.1998 GB 9819726
(43) Date of publication of application: 27.06.2001
(73) Proprietor: Advanced Cryogenic Systems Limited, Leeds, LS7 1QN (GB)
(72) Inventor: BOOTHROYD, David Lawrence Adv.Cryogenic Syst.Ltd., Leeds LS7 1QN (GB)
(74) Representative: Harrison Goddard Foote
(86) International application number: GB9902983
(87) International publication number: WO00015320

(56) References cited:
- EP-A- 0 761 274
- EP-A- 0 839 560
- DE-A- 2 449 442
- DE-A- 3 626 884
- FR-A- 2 755 873
- US-A- 4 122 684
- US-A- 5 291 738
- US-A- 5 704 227

## Description

The present invention relates to a method and apparatus for recovering gaseous volatile organic compounds (VOCs) in liquid form for use particularly, but not exclusively in the petrochemical industry for recovering petroleum vapours from petroleum transport vehicles and/or containers and/or fixed site installations.

Conventionally, when a petrol delivery tanker carrying a load arrives at a delivery site, for example a commercial petrol vending site, the tanker body is connected via an outlet port and hose so that petrol is voided from the tanker body. Voiding can be under gravity or it can be pressure assisted. Petrol passes through a conduit system to an underground storage facility or the like, from where customers/users can access the petrol at individual pumping stations. The space above the level of petroleum in the underground storage facility contains vapours, sometimes to a saturated level. Upon filling the storage facility with the delivery load, these vapours are displaced and vented to the atmosphere via extended pipes. When the tanker has transferred all its liquid contents to the storage facility, the tanker interior has petroleum vapours therein. Typically, the tanker would then make a return journey to its filling station/distribution depot for refilling.

At the distribution depot the tanker is connected to a fill pipe and petrol is pumped from a storage reservoir into the empty tanker. As the petrol fills the tanker, the vapours inside the tanker are expelled via a vent pipe to atmosphere. When the tanker is filled, it is then ready to make another delivery.

The vapours that are vented to atmosphere contain many potentially hazardous chemicals. These chemicals include benzene which, according to the International Agency for Cancer Research (IARC) classification system, is a class 1 carcinogen i.e. is proven to cause cancers in humans. International treaties and legislation seek to reduce benzene emission to a zero level and provide for heavy financial penalties and/or terms of imprisonment to those who do not comply.

Some specialised distribution depots provide fixed facilities to compress the tanker interior vapours during filling the tanker in an attempt to recover some of the gaseous VOCs in liquid petroleum gas (LPGs) form. However, not all distribution depots are provided with such compression facilities. Moreover these types of facilities are expensive to install and maintain. In the instance of a compression recovery facility breakdown, it follows that no tanker can be filled and so delivery is interrupted indefinitely at some considerable cost to the delivery company and inconvenience to the consumer. Additionally, compression recovery facilities can only handle a limited number of tankers at one time. The recovery process takes between 20-40 minutes per tanker, depending on the tanker size, to complete. Consequently, tanker queuing is commonplace.

Typically, between 40-60 litres of petrol can be recovered from a 33,000-litre carrying capacity tanker. Given that a tanker can make many trips per day then the volume of petrol recoverable is considerable. This volume of recovered petrol is commercially important since the vapours are a valuable duty paid product. Of perhaps more concern is that if the vapours are allowed to simply vent to atmosphere then the environmental pollution is overwhelming especially given the benzene content in petrol is in the range of several parts per million.

A further problem associated with the prior art is that during a return journey from a delivery site, for example a commercial petrol vending site to the filling station/distribution depot the tanker is carrying a load of gaseous VOCs. The load is thus potentially explosive and combustible during this transit period.

A system that could provide rapid, safe, economical, reliable vapour recovery at a site of delivery and a site of filling, in addition to providing an inert tanker load on a return journey would offer immediate advantage to the industry, consumer and the environment.

An apparatus for recovering a volatile organic compound (VOC) which arises in gaseous form during the transfer of a volatile organic liquid from a first to a second container, said apparatus comprising a vessel for storing a liquid cryogen and means for feeding said liquid cryogen to a stage heat exchanger unit, the liquid cryogen being contained within a pipe housed within a heat exchanger unit, characterised in that it is a single stage heat exchanger unit, the single stage heat exchanger unit being provided with a first port for receiving vapours froth said first or second container and a second port for allowing the liquid VOC, formed as a result of the gaseous VOC contacting a cold surface of the pipe to exit the single stage heat exchanger so as to be collected in a third container, the apparatus further comprising means for feeding the cryogen in its expanded gaseous form to said first container so as to create an inert atmosphere therein.

Preferably, one of said first or second containers is a tanker vehicle. Preferably, said cryogen is stored on or with said tanker vehicle. Preferably, said heat exchanger is mounted on or provided with said tanker vehicle. Preferably, said apparatus comprises a plurality of heat exchangers.

Preferably, said cryogen is liquid nitrogen or any other cryogen that is in liquid form, ideally the amount of liquid nitrogen provided is in the region of 20-50 Kg and more ideally 25-40 Kg.

Preferably, said apparatus additionally comprises a series of valves for controlling the flow of cryogen and/or gaseous volatile organic compound and/or condensed volatile organic compound recovered. The valve(s) may be expansion valves and operated by means of temperature and/or pressure and/or simple pneumatics.

Preferably, said heat exchanger houses an elongate section of pipe that is configured so as to provide a large surface area for vapour contact.

For example, the pipe may be configured so that it is bent, and ideally folded back upon itself, in flattened S/concertina fashion. In this way, the pipe surface area is maximised with respect to the volume it occupies within the heat exchanger. Accordingly a thin pipe can be bent back upon itself many times and provide a large surface area for vapour contact. The pipe is attached at one end to the cryogenic condenser, from which it transports liquid nitrogen to the heat exchanger. The pipe passes into a lower wall surface of the heat exchanger. Pipe inside the heat exchanger is configured so as to provide a large cold surface area for vapour contact. The pipe exits the heat exchanger at an upper wall surface into the tanker main body so that expanded gaseous nitrogen can fill the tanker and/or be vented to atmosphere.

Preferably, said heat exchanger is provided with at least two ports. A first port being positioned at an upper area of a wall for allowing vapours into the heat exchanger, and a second port being positioned at a lower area of a wall for allowing liquid to exit said heat exchanger. Ideally, said second port is associated with said third container.

In one embodiment of the invention the apparatus additionally comprises at least one refrigerant cooling unit, ideally said refrigerant cooling unit is sealed and is adapted to circulate a refrigerant such as glycol or the like.

It will be appreciated that the apparatus of the invention is intended to be operate on, or as part of, a delivery tanker but that the system is equally suited as a portable stand-alone unit or can be used at a fixed installation site. Thus, vapours can be recovered during a filling operation from either the tanker itself or the underground storage facility or both and the condensed petrol left on site. The specifics of which are not intended to limit the scope of the application.

In another embodiment of the invention the apparatus is provided as a kit of parts including at least one cryogen storage unit and at least one heat exchanger.

According to a second aspect of the present invention there is provided a method for recovering a volatile organic compound which arises in gaseous form during the transfer of a volatile organic liquid from a first to a second container, the method comprising feeding said gaseous volatile organic compound from said first or second container to a heat exchanger, feeding a cryogen to said heat exchanger to cause said gaseous volatile organic compound to condense and feeding said condensed volatile organic compound to a third container.

Preferably, said gaseous volatile organic compound is condensed during filling of said first or second container and may optionally be left on site.

Thus, gaseous volatile organic compound(s) can be recovered in liquid form during the filling of a tanker and the condensate can be left on site. Additionally, or alternatively, gaseous volatile organic compound(s) can be recovered from an underground tank via a recovery pipe placed in connection with the tanker as the fuel load is discharged from said tanker. The recovery pipe is connected at one end to a vent pipe which is provided with a suction and pressure valve. At an opposite end, said recovery pipe is connected to a dedicated port provided on the tanker for vapour collection. Concentrated gaseous volatile organic compound(s) is/are then returned to a depot for processing as the tanker is being re-filled. In another embodiment of the invention the heat exchanger is connected in series with said recovery pipe and the gaseous volatile organic compound(s) are condensed to liquid form before reaching the tanker. Expanded gaseous cryogen, ideally nitrogen, is fed to the tanker interior so as to provided an inert atmosphere therein.

A further advantage of the apparatus and method of the invention is in providing an atmospherically inert tanker interior so that transportation of a tanker, having unloaded its volatile organic liquid, is safer. Moreover volatile organic liquids are recovered form vapours and are not vented to atmosphere thus providing significant financial savings whilst concomitantly preventing environmental damage.

The invention will now be described, by way of example only with reference to the following Figures, wherein:
Figure 1 represents the vapour recovery system according to the present invention attached to a delivery tanker.
Figure 2 represents the heat exchanger unit of the vapour recovery system of Figure 1 in greater detail.
Figure 3 represents an alternative embodiment of a heat exchanger unit of the vapour recovery system according to the present invention.
Figure 4 represents a further alternative embodiment of a heat exchanger unit of the vapour recovery system according to the present invention.
Figure 5 represents a yet further alternative embodiment of a heat exchanger unit of the vapour recovery system according to the present invention.

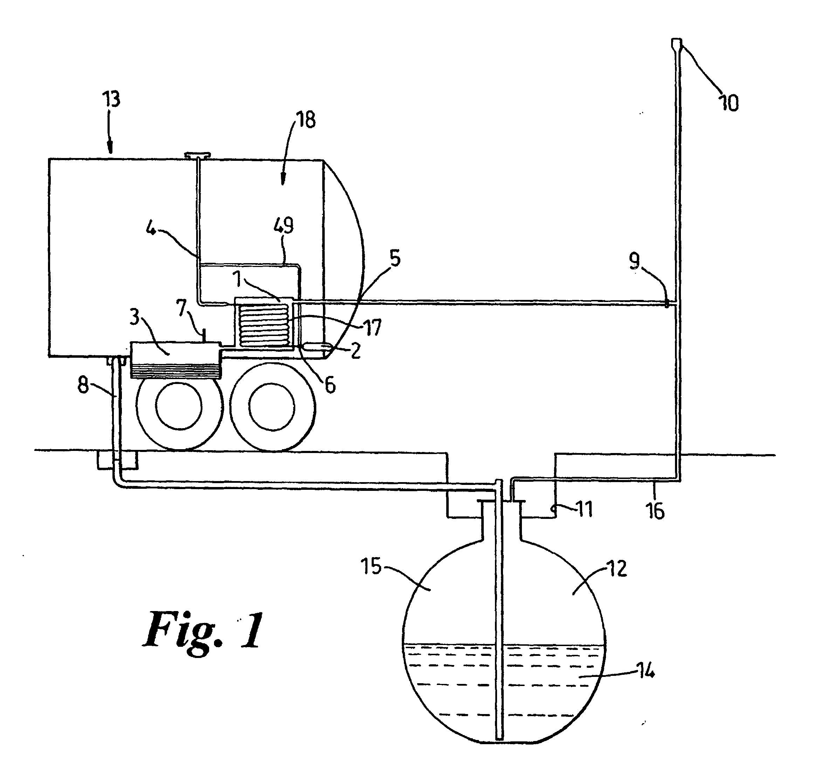

With reference to Figure 1 there is shown a vapour recovery system according to the present invention attached to a delivery tanker 13. The tanker 13 is connected to an underground petroleum storage tank 12 by a pipe 8 so as to deposit liquid petroleum 14 into the storage tank 12 positioned below man chamber 11. As the level of liquid petroleum 14 rises, vapours in space 15 are directed via pipe 16 under pressure and suction under the control of valve 10. Connection along pipe 16 to vapour collection pipe 5 is controlled by valve 9. In the instance of valve 9 being opened, vapours pass through pipe 5 into heat exchanger 1. In heat exchanger 1 vapours contact the cold shell of the undulated pipe-work infrastructure 17. Liquid nitrogen from cryogen storage unit 2 flows through the undulated pipe-work infrastructure 17 via control valve 6. The pipe-work 17 is shaped so as to provide a large surface area for vapours to contact so that the efficiency of recovery is maximised. Vapours that have condensed upon contact with the cold surface of cryogenic containing pipe-work 17 are decanted into a tank 3 provided with a vent 7. Expanded gaseous nitrogen is directed to ullage 18 of tanker 13 via pipe 4. During this process the liquid nitrogen boils, giving up both its sensible heat and its latent heat of evaporation. Provision for additional nitrogen, which is not necessary for the thermal reaction, is made by means of control valve 6 and a by-pass connection via pipe 49 into pipe 4.

It will therefore be appreciated from the foregoing that the vapour recovery system of the present invention involves no moving parts other than control valves, and that the system is powered by liquid nitrogen. No additional energy is required to complete the recovery of VOCs. Thus the system provides a means for recovering commercially important and environmentally damaging VOCs, at sites of delivery or sites of filling. Moreover the system can be fitted retrospectively to tankers or can be provided as a kit of parts or can be provided as an integral part of a delivery tanker or can be provided as a stand-alone portable apparatus for use with a tanker or fixed site installation. The system offers flexibility and is cost effective in saving time for recovery as compared to conventional recovery systems.

A further significant advantage of the vapour recovery system of the present invention is that the tanker is inert for its return load in that the contents of ullage 18 is gaseous nitrogen. Gaseous nitrogen can be safely vented to atmosphere without any deleterious effects to the environment since the earth's atmosphere is predominantly nitrogen (80%).

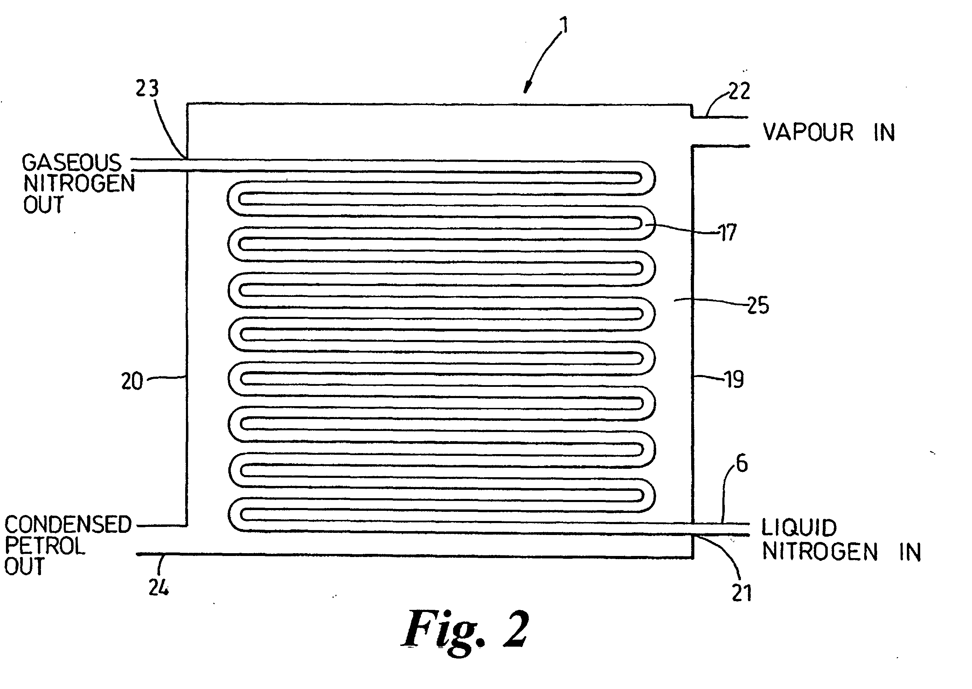

With reference to Figure 2 there is shown the heat exchanger 1 of Figure 1 in greater detail. Pipe 6 carrying liquid nitrogen enters heat exchanger 1 at position 21 of wall 19. The pipe is bent back upon itself so as to maximise the surface area available for vapour contact within the defined space 25 of the heat exchanger. Pipe 6 is continuous and exits the heat exchanger at an upper position 23 of wall 20. Vapour enters the heat exchanger via port 22 provided at an upper region of wall 19, and condensed petrol/ liquid exits via port 24 provided at a lower region of wall 20.

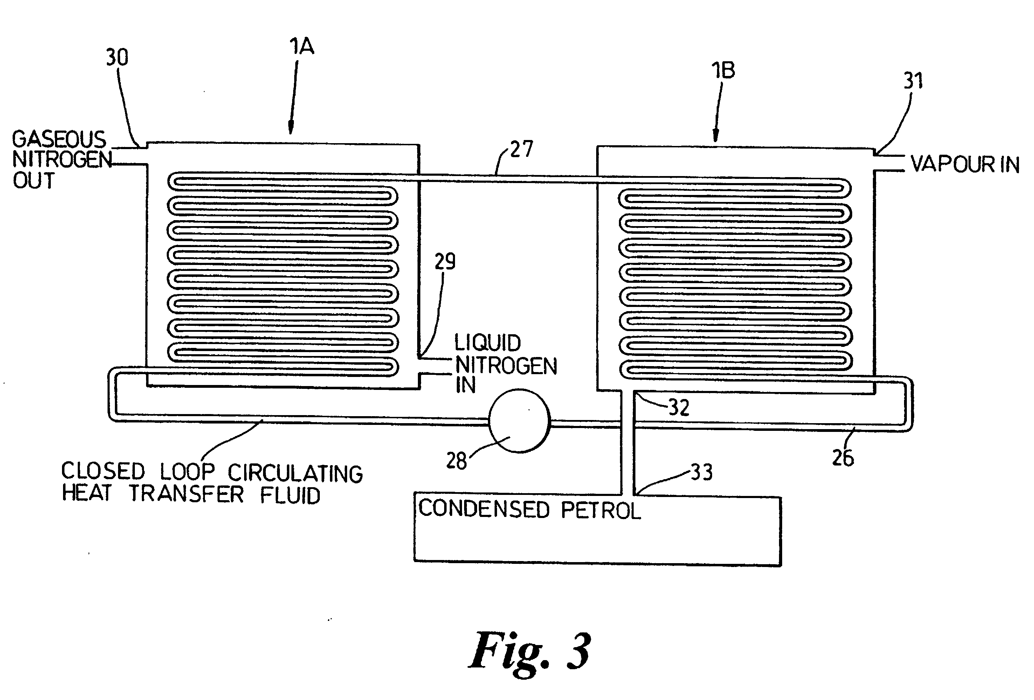

In the embodiment depicted in Figure 3 there is shown a two-stage condenser.

With reference to Figure 3 there is shown a pair of adjacent heat exchangers 1A and 1B, linked at an upper region by a bridge 27 of continuous closed lop circuit 26.
Heat transfer fluid such as glycol is circulated around pipe circuit 26 by means of a pump 28. In this embodiment liquid nitrogen enters heat exchanger 1A at port 29 and exits in gaseous form from port 30. Vapours enter adjacent heat exchanger 1B at port 31 and exit in liquid form via port 32 to be collected in vessel 33.

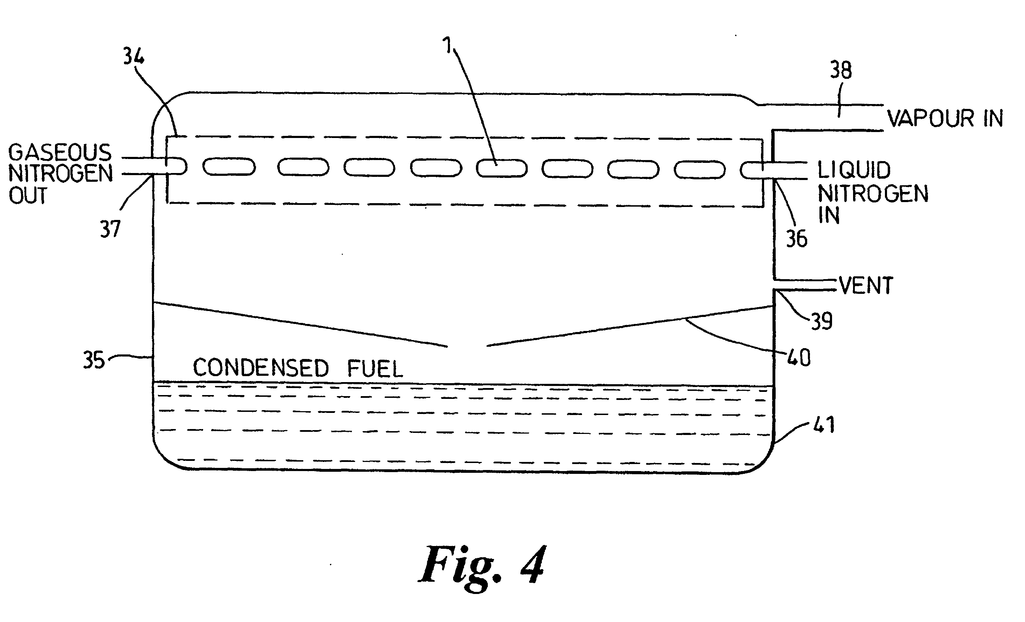

The embodiment of Figure 4 is suited to instances where there is a large temperature difference (ΔT) whereby sublimation of vapours could occur. This embodiment allows for the collection of frozen recovery product(s) after completion of a cycle. With reference to Figure 4 there is shown a single heat exchanger 1 positioned at an upper region 34 of a vessel 35. Liquid nitrogen enters at region 36 and exits in expanded gaseous form at region 37. Vapours enter the vessel at port 38 and pass over the heat exchanger 1 whereby they are condensed to liquid form and are directed by plates 40 so as to collect in vented 7 vessel 35 as pool 41. This embodiment is intended for use as a combined condenser and condensate storage tank.

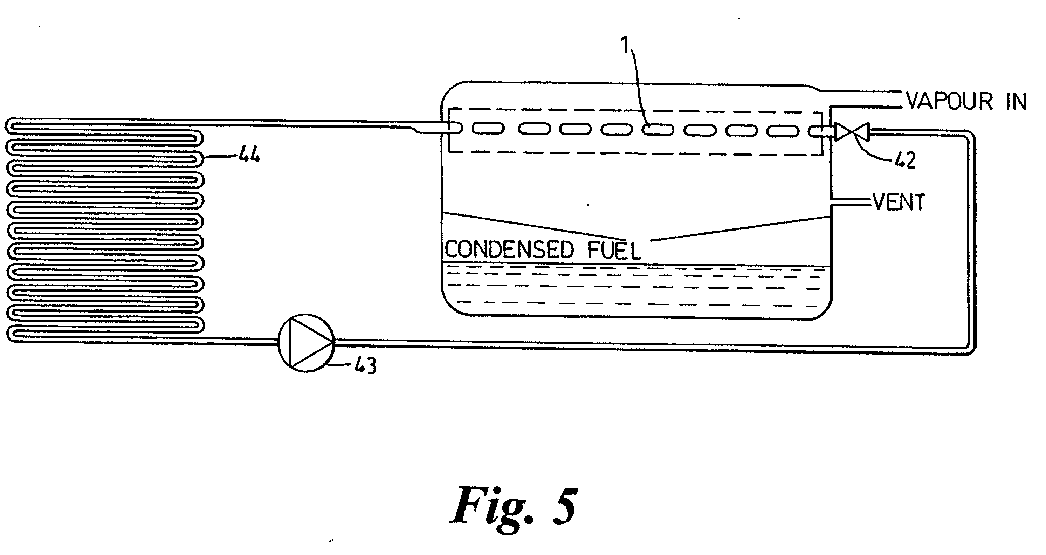

Finally, with reference to Figure 5 there is shown a yet further embodiment of the invention as depicted in Figure 4. In the embodiment of Figure 5 the vapour recovery system of the invention uses conventional refrigeration technology as the heat exchange medium. The system is additionally provided with an expansion valve, a compressor 43 and the coil 44 is air-cooled.

Thus it will be appreciated from the foregoing that the vapour recovery system of the present invention offers a flexible and economical system for recovering gaseous VOCs and condensing them to liquid form.

## Claims

1. An apparatus for recovering a volatile organic compound (VOC) which arises in gaseous form during the transfer of a volatile organic liquid from a first (13) to a second container (12), said apparatus comprising a vessel for storing a liquid cryogen and means for feeding said liquid cryogen to a stage heat exchanger unit (1), the liquid cryogen being contained within a pipe (17) housed within a heat exchanger unit, **characterised in that** it is a single stage heat exchanger unit, the single stage heat exchanger unit (1) being provided with a first port (22) for receiving vapours from said first (13) or second (12) container and a second port (24) for allowing the liquid VOC, formed as a result of the gaseous VOC contacting a cold surface of the pipe (17) to exit the single stage heat exchanger (1) so as to be collected in a third container (3), the apparatus further comprising means for feeding the cryogen in its expanded gaseous form to said first container (12) so as to create an inert atmosphere therein.

2. An apparatus according to Claim 1 wherein one of said first (13) or second (12) containers is a tanker vehicle.

3. An apparatus according to either preceding claim wherein said cryogen is stored on or with said tanker vehicle.

4. An apparatus according to any preceding claim wherein said heat exchanger (1) is mounted on or provided with said tanker vehicle.

5. An apparatus according to any preceding claim comprising a plurality of heat exchangers (1).

6. An apparatus according to any preceding claim wherein said liquid cryogen is liquid nitrogen.

7. An apparatus according to Claim 6 wherein the amount of liquid nitrogen provided is in the region of 20-50 Kg

8. An apparatus according to Claim 7 wherein the amount of liquid nitrogen provided is 25-40 Kg.

9. An apparatus according to any preceding claim further comprising a series of valves for controlling the flow of cryogen and/or gaseous volatile organic compound and/or condensed volatile organic compound recovered.

10. An apparatus according to Claim 9 wherein the valves are expansion valves operated by changes in temperature and/or pressure and/or by simple pneumatics.

11. An apparatus according to Claim 1 wherein the heat exchanger houses an elongate section of pipe that is configured so as to provide a large surface area for vapour contact.

12. An apparatus according to Claim 11 wherein the pipe is bent and folded back upon itself in flattened S/concertina fashion.

13. An apparatus according to either Claim 11 or 12 wherein one end of the pipe is attached to the cryogenic condenser, from which it transports liquid nitrogen to the heat exchanger.

14. An apparatus according to any of Claims 11-13 wherein one end of the pipe exits the heat exchanger at an upper wall surface into the tanker main body so that expanded gaseous nitrogen can fill the tanker and/or be vented to atmosphere.

15. An apparatus according to any preceding claim wherein the heat exchanger is provided with at least two ports.

16. An apparatus according to Claim 15 wherein a first port (27) is positioned at an upper area of a wall for allowing vapours into the heat exchanger, and a second port (24) is positioned at a lower area of a wall for allowing liquid to exit said heat exchanger.

17. An apparatus according to either Claim 15 or 16 wherein the second port (24) is associated with said third container.

18. An apparatus according to Claim 1 further comprising at least one refrigerant cooling unit.

19. An apparatus according to Claim 18 wherein the refrigerant cooling unit is sealed and is adapted to circulate a refrigerant such as glycol or the like.

20. An apparatus according to any preceding claim wherein the apparatus operates on, or as part of, a delivery tanker or alternatively as a portable stand-alone unit or at a fixed installation site.

21. An apparatus according to any preceding claim for recovering a volatile organic compound which arises in gaseous form during the transfer of a volatile organic liquid from a first to a second container comprising a kit of parts including at least one cryogen storage unit and at least one heat exchanger.

22. A method, using the apparatus according to any preceding claim, for recovering a volatile organic compound which arises in gaseous form during the transfer of a volatile organic liquid from a first to a second container an inert atmosphere being created in said first or second container, the method comprising feeding said gaseous volatile organic compound from said first or second container to a heat exchanger, feeding a cryogen to said heat exchanger to cause said gaseous volatile organic compound to condense and feeding said condensed volatile organic compound to a third container.

23. A method according to Claim 22 wherein said gaseous volatile organic compound is condensed during filling of said first or second container.

24. A method according to either Claim 22 or 23 wherein the gaseous volatile organic compound(s) is/are be recovered in liquid form during the filling of a tanker and the condensate is left on site, additionally, or alternatively, gaseous volatile organic compound(s) is/are recavered from an underground tank via a recovery pipe placed in connection with the tanker as the fuel load is discharged from said tanker.

25. A method according to any of Claims 22-24 wherein the recovery pipe is connected at one end to a vent pipe which is provided with a suction and pressure valve and at an opposite end said recovery pipe is connected to a dedicated port provided on the tanker for vapour collection whereby vapour recovery is controlled.

26. A method according to any of Claims 22-25 wherein concentrated gaseous volatile organic compoimd(s) is/are then returned to a depot for processing as the tanker is being re-filled.

27. A method according to any of Claims 22-26 wherein the heat exchanger is connected in series with said recovery pipe whereby gaseous volatile organic compound(s) are condensed to liquid form before reaching the tanker.

28. A method according to any of Claims 22-27 wherein expanded gaseous cryogen is fed to the tanker interior so as to provided an inert atmosphere therein.

## Revendications

1. Appareil de récupération d'un composé organique volatile (COV) qui se présente sous une forme gazeuse durant le transfert d'un liquide organique volatile d'un premier (13) vers un second conteneur (12), ledit appareil comprenant un récipient pour stocker un cryogène liquide et des moyens pour alimenter ledit cryogène liquide vers une unité d'échange thermique à étape (1), le cryogène liquide étant contenu à l'intérieur d'un tuyau (17) disposé à l'intérieur d'une unité d'échange thermique, **caractérisée en ce qu'**elle est une unité d'échange thermique à simple étape, l'unité d'échange thermique à simple étape étant pourvue d'un premier port (22) pour recevoir les vapeurs dudit premier (13) ou second (12) conteneur et un second port (24) permettant au COV liquide, formé comme un résultat du COV gazeux en contact d'une surface froide du tuyau (17), de sortir de l'échangeur thermique à simple étape (1) de manière à être collecté dans un troisième conteneur (3), l'appareil comprenant de plus des moyens pour alimenter le cryogène dans sa forme gazeuse expansée audit premier conteneur (12) de manière à créer une atmosphère inerte à l'intérieur de celui-ci.

2. Appareil selon la revendication 1, **caractérisé en ce qu'**un desdits premier (13) ou second (12) conteneurs est un véhicule à citerne.

3. Appareil selon l'une des revendications précédentes, **caractérisé en ce que** le cryogène est stocké sur ou dans le véhicule à citerne.

4. Appareil selon l'une des revendications précédentes, **caractérisé en ce que** ledit échangeur thermique (1) est monté sur ou pourvu d'un véhicule à citerne.

5. Appareil selon l'une des revendications précédentes, **caractérisé en ce qu'**il comprend une pluralité d'échangeurs thermiques (1).

6. Appareil selon l'une des revendications précédentes, **caractérisé en ce que** ledit cryogène liquide est l'azote liquide.

7. Appareil selon la revendication 6, **caractérisé en ce que** la quantité d'azote liquide fournie est de l'ordre de 20 à 50 kg.

8. Appareil selon la revendication 7, **caractérisé en ce que** la quantité d'azote liquide fournie est de 25-40 kg.

9. Appareil selon l'une des revendications précédentes, comprenant de plus une série de soupapes pour contrôler l'écoulement de cryogène et/ou de composés organiques volatiles gazeux et/ou de composés organiques volatiles condensés récupérés.

10. Appareil selon la revendication 9, **caractérisé en ce que** les soupapes sont des soupapes d'expansion mises en fonctionnement par des modifications de température et/ou de pression et/ou par des pneumatiques simples.

11. Appareil selon la revendication 1, **caractérisé en ce que** l'échangeur thermique comporte une section allongée de tuyau qui est configurée de manière à fournir une surface importante pour le contact avec la vapeur.

12. Appareil selon la revendication 11, **caractérisé en ce que** le tuyau est courbé et replié sur lui-même sous la forme d'un S aplati / d'un accordéon.

13. Appareil selon la revendication 11 ou 12, **caractérisé en ce qu'**une extrémité du tuyau est attachée au condenseur cryogénique, à partir duquel il transporte l'azote liquide vers l'échangeur thermique.

14. Appareil selon l'une des revendications 11 à 13, **caractérisé en ce qu'**une extrémité du tuyau sort de l'échangeur thermique sur une surface de paroi supérieure vers le corps principal de la citerne de manière à ce que l'azote gazeux expansé puisse remplir la citerne et/ou être déchargé vers l'atmosphère.

15. Appareil selon l'une des revendications précédentes, **caractérisé en ce que** l'échangeur thermique est pourvu d'au moins deux ports.

16. Appareil selon la revendication 15, **caractérisé en ce que** le premier port (27) est positionné sur une surface supérieure d'une paroi pour permettre des vapeurs dans l'échangeur thermique, et un second port (24) est positionné sur une surface inférieure d'une paroi pour permettre au liquide de sortir dudit échangeur thermique.

17. Appareil selon l'une des revendications 15 ou 16, **caractérisé en ce que** le second port (24) est associé avec ledit troisième conteneur.

18. Appareil selon la revendication 1, comprenant de plus au moins une unité de refroidissement réfrigérante.

19. Appareil selon la revendication 18, **caractérisé en ce que** l'unité de refroidissement réfrigérante est étanchéifiée et est adaptée pour permettre la circulation d'un réfrigérant tel que le glycol ou un équivalent.

20. Appareil selon l'une des revendications précédentes, **caractérisé en ce que** l'appareil fonctionne comme, ou comme une partie de, une citerne de distribution ou, de manière alternative, comme une unité autonome portable ou sur un site d'installation fixée.

21. Appareil selon l'une des revendications précédentes pour récupérer un composé organique volatile qui se présente sous forme gazeuse durant le transfert d'un liquide organique volatile d'un premier vers un second conteneur comprenant un ensemble de parties incluant au moins une unité de stockage cryogène et au moins un échangeur thermique.

22. Méthode utilisant l'appareil selon l'une des revendications précédentes, pour récupérer un composé organique volatile qui se présente sous forme gazeuse durant le transfert d'un liquide organique volatile d'un premier vers un second conteneur, une atmosphère inerte étant créée dans ledit premier ou second conteneur, la méthode comprenant l'alimentation dudit composé organique volatile gazeux d'un premier ou second conteneur vers un échangeur thermique, l'alimentation d'un cryogène vers ledit échangeur thermique pour entraîner la condensation dudit composé organique volatile gazeux et l'alimentation dudit composé organique volatile condensé vers un troisième conteneur.

23. Méthode selon la revendication 22, **caractérisée en ce que** ledit composé organique volatile gazeux est condensé durant le remplissage dudit premier ou second conteneur.

24. Méthode selon l'une des revendications 22 ou 23, **caractérisée en ce que** le(s) composé(s) organique(s) volatile(s) gazeux est/sont récupérés sous forme liquide durant le remplissage d'une citerne et le condensat est laissé sur place, de manière additionnelle, ou alternative, le ou les composés organiques volatiles gazeux est ou sont récupérés à partir d'une cuve souterraine grâce à un tuyau de récupération placé en connexion avec la citerne quand le chargement de combustibles est déchargé de ladite citerne.

25. Méthode selon l'une des revendications 22 à 24, **caractérisée en ce que** le tuyau de récupération est connecté à une extrémité d'un tuyau de ventilation qui est pourvu d'une soupape de pression et d'aspiration et, à une extrémité opposée, ledit tuyau de récupération est connecté à un port dédié, pourvu sur la citerne pour la collecte de vapeur aux moyens duquel la récupération de vapeur est contrôlée.

26. Méthode selon l'une des revendications 22 à 25, **caractérisée en ce que** le ou les composé(s) organique(s) volatile(s) gazeux concentré(s) est/sont ensuite retoumé(s) à un dépôt pour le traitement quand la citerne est de nouveau remplie.

27. Méthode selon l'une des revendications 22 à 26, **caractérisée en ce que** l'échangeur thermique est connecté en série avec ledit tuyau de récupération aux moyens duquel le ou les composé(s) organique(s) volatile(s) gazeux est/sont condensé(s) sous forme liquide avant d'atteindre la citeme.

28. Méthode selon l'une des revendications 22 à 27, **caractérisée en ce que** le cryogène gazeux expansé est alimenté vers l'intérieur de la citerne de manière à fournir une atmosphère inerte à l'intérieur.

## Patentansprüche

1. Vorrichtung zur Rückgewinnung einer flüchtigen organischen Verbindung (FOV), welche in Gasform während der Übertragung flüchtiger organischer Flüssigkeiten aus einem ersten (13) in einen zweiten Behälter (12) aufsteigt, die genannte Vorrichtung umfassend ein Gefäß zum Speichern einer kryogenen Flüssigkeit und Mittel zum Zuführen der genannten kryogenen Flüssigkeit zu einer Stufen-Wärmetauscher-Einheit (1), wobei die kryogene Flüssigkeit innerhalb eines Rohres (17) enthalten ist, welches in einer Wärmetauscher-Einheit eingebaut ist, **dadurch gekennzeichnet, daß** es eine einstufige Wärmetauscher-Einheit ist, wobei die einstufige Wärmetauscher-Einheit (1) mit einem ersten Anschluß (22) zur Aufnahme von Dämpfen aus dem genannten ersten (13) oder zweiten (12) Behälter und einem zweiten Anschluß (24) versehen ist, der es flüssiger, als Ergebnis des Kontaktes der gasförmigen FOV mit einer kalten Oberfläche des Rohres (17) gebildeter FOV ermöglicht, aus dem einstufigen Wärmetauscher (1) auszutreten, um in einem dritten Behälter (3) gesammelt zu werden, wobei die Vorrichtung weiterhin Mittel für die Zufuhr des Kryogens in seiner ausgedehnten gasförmigen Form zu dem genannten ersten Behälter (12) umfaßt, um darin eine inerte Atmosphäre zu erzeugen.

2. Vorrichtung nach Anspruch 1, wobei einer der genannten ersten (13) und zweiten (12) Behälter ein Tankfahrzeug ist.

3. Vorrichtung nach einem der vorangehenden Ansprüche, wobei das Kryogen an oder mit dem genannten Tankfahrzeug gespeichert ist.

4. Vorrichtung nach einem der vorangehenden Ansprüche, wobei der genannte Wärmetauscher (1) an dem Tankfahrzeug befestigt oder mit dem genannte Tankfahrzeug bereitgestellt ist.

5. Vorrichtung nach einem der vorangehenden Ansprüche mit einer Mehrzahl von Wärmetauschern (1).

6. Vorrichtung nach einem der vorangehenden Ansprüche, wobei die genannte kryogene Flüssigkeit flüssiger Stickstoff ist.

7. Vorrichtung nach Anspruch 6, wobei die Menge des bereitgestellten flüssigen Stickstoffes im Bereich von 20 - 50 kg liegt.

8. Vorrichtung nach Anspruch 6, wobei die Menge des bereitgestellten flüssigen Stickstoffes 25 - 40 kg ist.

9. Vorrichtung nach einem der vorangehenden Ansprüche, ferner umfassend eine Anzahl von Ventilen zum Kontrollieren der Strömung des Kryogens und/oder der gasförmigen flüchtigen organischen Verbindung und/oder der rückgewonnenen kondensierten flüchtigen organischen Verbindung.

10. Vorrichtung nach Anspruch 9, wobei die Ventile Expansionsventile sind, welche durch Änderungen der Temperatur und/oder des Drucks und/oder durch einfache Pneumatik betätigt werden.

11. Vorrichtung nach Anspruch 1, wobei der Wärmetauscher einen länglichen Rohrabschnitt aufnimmt, der so ausgebildet ist, daß er eine große Oberfläche für Dampfkontakt bereitstellt.

12. Vorrichtung nach Anspruch 11, wobei das Rohr gebogen und flach, S/zickzackartig auf sich selbst zurückgefaltet ist.

13. Vorrichtung nach Anspruch 11 oder 12, wobei ein Ende des Rohres am kryogenen Kondensator befestigt ist, von dem es flüssigen Stickstoff zum Wärmetauscher transportiert.

14. Vorrichtung nach einem der Ansprüche 11 - 13, wobei ein Ende des Rohres aus dem Wärmetauscher an einer oberen Wandfläche in den Hauptteil des Tankers austritt, so daß expandierter, gasförmiger Stickstoff den Tanker füllen und/oder in die Atmosphäre abgelassen werden kann.

15. Vorrichtung nach einem der vorangehenden Ansprüche, wobei der Wärmetauscher mit wenigstens zwei Anschlüssen versehen ist.

16. Vorrichtung nach Anspruch 15, wobei ein erster Anschluß (27) an einem oberen Bereich einer Wand zur Ermöglichung des Eintritts von Dämpfen in den Wärmetauscher und ein zweiter Anschluß (24) an einem unteren Bereich einer Wand zur Ermöglichung des Austritts von Flüssigkeit aus dem genannten Wärmetauscher angeordnet ist.

17. Vorrichtung nach Anspruch 15 oder 16, wobei der zweite Anschluß (24) dem genannten dritten Behälter zugeordnet ist.

18. Vorrichtung nach Anspruch 1, ferner umfassend mindestens eine Kältemittel-Kühleinheit.

19. Vorrichtung nach Anspruch 18, wobei die Kältemittel-Kühleinheit abgedichtet und zum Umwälzen eines Kühlmittels wie Glykol oder ähnliches angepaßt ist.

20. Vorrichtung nach einem der vorangehenden Ansprüche, wobei die Vorrichtung an oder als Teil eines Liefer-Tankers oder alternativ als tragbare autonome Einheit oder an einem festen Installationsort betrieben wird.

21. Vorrichtung nach einem der vorangehenden Ansprüche zur Rückgewinnung einer flüchtigen organischen Verbindung, welche in gasförmiger Form während der Übertragung einer flüchtigen organischen Flüssigkeit von einem ersten in einen zweiten Behälter aufsteigt, umfassend einen Satz von Teilen, der mindestens eine kryogene Speichereinheit und mindestens einen Wärmetauscher enthält.

22. Verfahren, welches die Vorrichtung nach einem der vorangehenden Ansprüche verwendet, zur Rückgewinnung einer flüchtigen organischen Verbindung, welche in gasförmiger Form während der Übertragung einer flüchtigen organischen Flüssigkeit von einem ersten in einen zweiten Behälter aufsteigt, wobei eine inerte Atmosphäre in dem genannten ersten oder zweiten Container erzeugt wird, das Verfahren umfassend die Zufuhr der genannten gasförmigen flüchtigen organischen Verbindung von dem genannten ersten oder zweiten Behälter zu einem Wärmetauscher, Zufuhr eines Kryogens in den genannten Wärmetauscher, um die Kondensation der genannten gasförmigen flüchtigen organischen Verbindung zu verursachen, und Zufuhr der genannten kondensierten flüchtigen organischen Verbindung in einen dritten Behälter.

23. Verfahren nach Anspruch 22, wobei die genannte gasförmige flüchtige organische Verbindung während des Füllens des genannten ersten oder zweiten Behälters kondensiert wird.

24. Verfahren nach Anspruch 22 oder 23, wobei die gasförmige/n flüchtige/n Verbindung/en in flüssiger Form während des Füllens eines Tankers rückgewonnen wird/werden und das Kondensat am Ort verbleibt, zusätzlich oder alternativ (eine) gasförmige flüchtige organische Verbindung(en) rückgewonnen wird/werden von einem Tiefbehälter über ein Rückgewinnungsrohr, welches in Verbindung mit dem Tanker gebracht wird, wenn die Brennstoffladung aus dem Tank entladen wird.

25. Verfahren nach einem der Ansprüche 22-24, wobei das Rückgewinnungsrohr an einem Ende mit einem Belüftungsrohr verbunden wird, welches mit einem Saugund Druckventil versehen ist, und das genannte Rückgewinnungsrohr an einem anderen Ende mit einem bestimmten Anschluß verbunden wird, der an dem Tanker zur Dampfsammlung vorgesehen ist, wodurch die Dampf-Rückgewinnung kontrolliert wird.

26. Verfahren nach einem der Ansprüche 22 - 25, wobei (eine) konzentrierte gasförmige flüchtige organische Verbindung(en) anschließend zu einem Depot zur Verarbeitung zurückgebracht wird/werden, wenn der Tanker neu gefüllt wird.

27. Verfahren nach einem der Ansprüche 22 - 26, wobei der Wärmetauscher in Reihe mit dem genannten Rückgewinnungsrohr verbunden ist, wodurch (eine) gasförmige flüchtige oraganische Verbindung(en) in eine flüssige Form kondensiert wird/werden, bevor sie den Tanker erreichen.

28. Verfahren nach einem der Ansprüche 22 - 27, wobei expandiertes gasförmiges Kryogen dem Inneren des Tankers zugeführt wird, um darin eine inerte Atmosphäre zu schaffen.
